# EUROPÄISCHE PATENTSCHRIFT

(11) **EP 2 716 190 B1**
(45) Veröffentlichungstag und Bekanntmachung des Hinweises auf die Patenterteilung: **30.09.2015**
(21) Anmeldenummer: 12187476.2
(22) Anmeldetag: 05.10.2012
(51) Int. Cl.: A47J 36/24, A47J 39/00

(54) **Vorrichtung zum Warmhalten von Speisen**
Device for keeping food warm
Dispositif de maintien au chaud

(43) Veröffentlichungstag der Anmeldung: 09.04.2014
(73) Patentinhaber: Team-Kalorik-Group N.V./S.A., 1640 Rhode-Saint-Genese (BE)
(72) Erfinder: Stolle, Michael, B-1180 Bruessel (BE)
(74) Vertreter: Reitstötter Kinzebach

(56) Entgegenhaltungen:
- EP-A1- 2 286 701
- US-A1- 2011 252 813

## Beschreibung

Die Erfindung betrifft eine Vorrichtung zum Erwärmen oder Warmhalten von Speisen mittels einer elektromagnetischen Strahlungsquelle zum Abstrahlen von Wärmestrahlung.

Vorrichtungen dieser Art finden in der Gastronomie, beispielsweise in Fastfood-Restaurants Anwendung. Sie können neben dem Erwärmen und Warmhalten der Speisen auch der attraktiven Präsentation dienen. Seit einiger Zeit sind gegenüber herkömmlichen elektrischen Heizelementen, beispielsweise durch Heizspiralen beheizbare Bleche, zunehmend auch elektromagnetische Strahlungsquellen, insbesondere Infrarotstrahler, in Gebrauch gekommen, die die Speisen mit infraroter elektromagnetischer Strahlung beaufschlagen.

Der Vorteil des Einsatzes elektromagnetischer Strahlungsquellen liegt in der höheren Energieeffizienz, einer gleichmäßigeren Wärmeverteilung und der gleichzeitigen Beleuchtungsmöglichkeit.

In der GB 2 349 454 A ist eine durch einen Infrarotstrahler beheizbare Essensauslage angegeben, bei der eine speziell designte Abstrahlplatte vor der Strahlungsquelle für eine günstige Abstrahlcharakteristik der elektromagnetischen Strahlung sorgt. Um das Bedienpersonal vor möglichen Verletzungen durch Kontakt mit heißen Gehäuseteilen zu schützen, werden Metall- oder Maschendrahtgitter um die heißen Stellen herum vorgeschlagen oder aber der Gebrauch von Nylontabletts als Unterlage für die angebotenen Speisen.

Neben der Verletzungsgefahr durch Berühren von heißen Gehäuseteilen besteht ein weiterer Nachteil darin, dass durch die geöffnete Stirnseite der Essensauslage Keime in die Aufbewahrungszone eindringen können. Dies ist insbesondere für einen langen Präsentationszeitraum der Speisen und für jene Bereiche der Aufbewahrungszonen mit nur mäßigen Warmhaltetemperaturen ein Problem.

Es ist die Aufgabe der vorliegenden Erfindung, eine Vorrichtung der genannten Art bereitzustellen, die die genannten Nachteile abmildert und damit höheren Anforderungen aus hygienischer und arbeitssicherheitstechnischer Sicht genügt.

Erfindungsgemäß wird diese Aufgabe durch eine Vorrichtung mit den Merkmalen des Anspruchs 1 gelöst. Vorteilhafte Aus- und Weiterbildungen ergeben sich aus den abhängigen Ansprüchen.

Die erfindungsgemäße Vorrichtung zum Erwärmen oder Warmhalten von Speisen umfasst ein Gehäuse mit mindestens einer Öffnung zum Auffüllen oder zur Entnahme der Speisen, einen Innenraum, der durch das Gehäuse gebildet wird und wenigstens eine im Innenraum des Gehäuses angeordnete elektromagnetische Strahlungsquelle zum Abstrahlen von Wärmestrahlung. Erfindungsgemäß ist die Vorrichtung dadurch gekennzeichnet, dass das Gehäuse eine Kühleinrichtung zum Kühlen wenigstens eines Teils des Gehäuses aufweist. Dabei werden bevorzugt zumindest die Teile des Gehäuses gekühlt, mit denen der Benutzer beim Auffüllen mit oder Entnehmen von Speisen in Kontakt kommen kann. Das Gehäuse kann aus unterschiedlichsten Materialien bestehen, ist aber typischerweise mindestens teilweise aus Edelstahl gefertigt.

Die Kühleinrichtung kann eine elektrische Kühlung, beispielsweise mittels Peltierelementen, oder eine Kühlfluidkreislauf mit Wärmetauscher umfassen. In vielen Fällen reicht jedoch bereits die an den zu kühlenden Gehäuseteilen vorbeigeführte Umgebungsluft zur wirksamen Kühlung aus. Daher umfasst die Kühleinrichtung Ventilationsmittel, die einen Luftstrom aus der Umgebung entlang der zu kühlenden Teile des Gehäuses transportieren. Ventilationsmittel im Sinne der Erfindung umfassen insbesondere Rotationslüfter, beispielsweise in der Bauart eines Tangential- oder Walzenlüfters. Die zu kühlenden Teile des Gehäuses umfassen typischerweise zumindest einen Teil der die mindestens eine Öffnung umgebenden Gehäuseteile.

In einer Weiterbildung der erfindungsgemäßen Vorrichtung ist die wenigstens eine Öffnung an der Stirnseite des Gehäuses angeordnet. Die Ventilationsmittel können dabei in einer die Oberseite der wenigstens einen Öffnung bildenden Querleiste angeordnet sein.

Gemäß der Erfindung erzeugen die Ventilationsmittel einen im Wesentlichen parallel zur Öffnungsebene verlaufenden Luftstrom. Dieser kann insbesondere vertikal nach unten auf die untere Begrenzung der Öffnung gerichtet sein. "Im Wesentlichen parallel" bedeutet im Sinne der Erfindung, dass es einen kleinen Winkel zwischen der Öffnungsebene und dem verlaufenden Luftstrom geben kann. Auch wird der Luftstrom im Allgemeinen nicht rein parallel sein, sondern vom Ventilationsmittel weg gerichtet leicht divergent verlaufen. Dieser, durch Kontakt mit den zu kühlenden Gehäuseteilen erwärmte Luftstrom bildet gewissermaßen einen "Warmluftvorhang" an der Gehäuseöffnung, der ein Eindringen von kühlerer Umgebungsluft ins den Gehäuseinnenraum behindert und so einerseits eine Abkühlung der zu erwärmenden Speisen verhindert und andererseits ein Eindringen von Partikeln oder Mikroorganismen und anderen Verschmutzungen aus der Umgebung in den Innenraum mit den dort befindlichen Speisen erschwert oder unmöglich macht.

In einer Ausgestaltung der erfindungsgemäßen Vorrichtung ist der Innenraum mittels Zwischenböden in im Wesentlichen vertikal voneinander beabstandete Fächer mit den jeweiligen Fächern zugeordneten Öffnungen unterteilt. "Im Wesentlichen vertikal" bedeutet im Sinne der Erfindung, dass es eine leichte Neigung der Fächer geben kann. Beispielsweise ermöglichen leicht gegen die Horizontale geneigte Fachböden, dass die einzelnen Fächer über eine Beschickungsöffnung mit Speisen beschickt werden können, die dann entlang der Fachbodenneigung zu einer gegenüberliegenden Entnahmeöffnung rutschen. In diesem Fall können sowohl die Beschickungs- als auch die Entnahmeöffnung mit einem Warmluftvorhang der oben beschriebenen Art versehen sein. Jedes der Fächer kann für sich einen eigenen Innenraum bilden und damit auch eine oder mehrere Strahlungsquellen und Mittel zur Ventilation aufweisen. Ferner können die Öffnungen durch Klappen oder Abdeckungen verschließbar sein.

In einer Weiterbildung der erfindungsgemäßen Vorrichtung ist der Luftstrom zusätzlich im Wesentlichen horizontal in den Innenraum gerichtet, wobei "im Wesentlichen horizontal" im Sinne der Erfindung wieder eine leichte Neigung der Fächer berücksichtigt. Die Luft strömt hierbei entweder entlang der oberen Innenwand des Gehäuses und/oder den Unterseiten der Zwischenböden oder durch in der oberen Innenwand des Gehäuses und/oder in den Zwischenböden gebildete Kanäle. Dabei wird die Luft an der Rückseite des Gehäuses weiter nach unten abgelenkt.

Das Ventilationsmittel in der erfindungsgemäßen Vorrichtung kann ein Lüftungselement umfassen, das ein in einem mit Lüftungsschlitzen versehenen Hohlraum montiertes Lüftungsgebläse aufweist.

Die elektromagnetische Strahlungsquelle ist typischerweise an der oberen Innenwand des Gehäuses und/oder den Unterseiten der Zwischenböden befestigt oder in diese integriert. Die Anzahl der Strahlungsquellen und deren Positionierung kann dabei an die Anforderungen, wie beispielsweise die Verteilung der warmzuhaltenden Speisen oder aber auch Kostengesichtspunkte der Vorrichtung, angepasst werden.

Vorteilhafterweise ist die elektromagnetische Strahlungsquelle als Halogenstrahler ausgestaltet und kann eine oder mehrere Wellenlängenbereiche im Infrarotspektrum abstrahlen. Die Strahlungsquelle ist insbesondere auf jene Wellenlängenbereiche optimiert, die bevorzugt von Speisen absorbiert werden, beispielsweise im Mikrowellenbereich. Der Spektralanteil kann aber auch einen Bereich im sichtbaren Licht zur Beleuchtung der Speisen umfassen.

Gemäß einer bevorzugten Ausführungsform ist eine Temperatursteuerung zur Steuerung der Strahlungsquelle zum Abstrahlen von Wärmestrahlung und/oder zur Steuerung der Kühleinrichtung vorgesehen. Bevorzugt umfasst die Temperatursteuerung dabei wenigstens einen Temperatursensor zur Messung der Temperatur im Innenraum des Gehäuses. Der Temperatursensor kann beispielsweise in einem Boden oder Zwischenboden des Gehäuses angeordnet sein.

Die Erfindung wird nun anhand von bevorzugten Ausführungsformen unter Bezugnahme auf die beigefügten Zeichnungen näher erläutert.
- Fig. 1: zeigt eine perspektivische Sicht auf ein Ausführungsbeispiel der erfindungsgemäßen Vorrichtung;
- Fig. 2a und 2b: zeigen seitliche Schnitte zweier Ausführungsbeispiele der erfindungsgemäßen Vorrichtung;
- Fig. 3a: zeigt ein teilweise zerlegtes Lüftungselement, wie es in einem Ventilationsmittel der erfindungsgemäßen Vorrichtung eingebaut sein kann;
- Fig. 3b: zeigt das aus Figur 3a zusammengebaute Lüftungselement und
- Fig. 4: veranschaulicht den Luftstrom in einem vorteilhaften Ausführungsbeispiel der erfindungsgemäßen Vorrichtung.

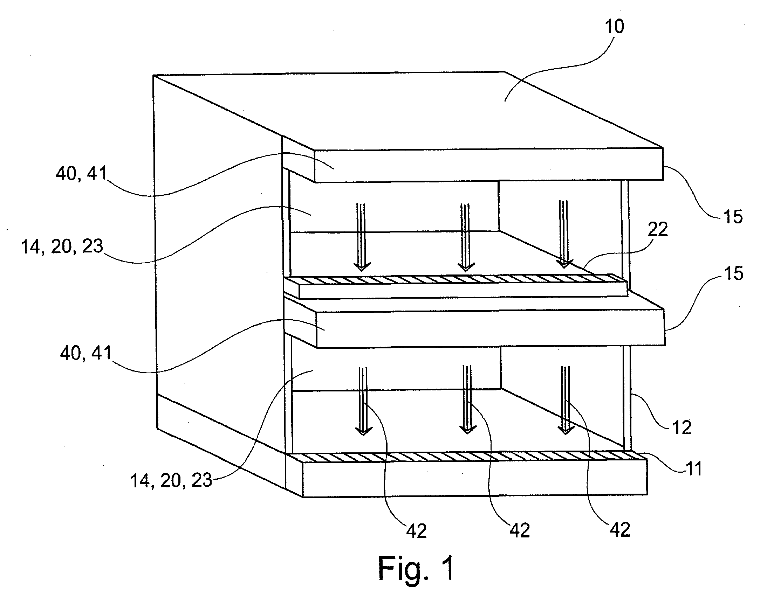

In Figur 1 ist eine erfindungsgemäße Vorrichtung zum Erwärmen oder Warmhalten von Speisen dargestellt. Die perspektivische Ansicht zeigt ein Gehäuse 10, an dessen Stirnseite 12 durch zwei Öffnungen 14 dahinterliegende Fächer 23 sichtbar sind. Die Fächer 23 bilden den Innenraum 20 des Gehäuses 10. Die oberen Ränder der Öffnungen 14 weisen Querleisten 15 auf, in denen eine Kühleinrichtung 40, insbesondere Ventilationsmittel 41, montiert sein können.

Durch Lüftungsschlitze 45, hier nicht gezeigt, kann ein durch die Ventilationsmittel 41 erzeugter Luftstrom 42 parallel zur Öffnungsebene nach unten gerichtet werden. Am unteren Rand der Öffnungen 14 trifft dieser Luftstrom 42 auf die zu kühlenden Teile 11 des Gehäuses 10. Diese Teile 11 des Gehäuses 10 stellen insbesondere die Gefahrenquellen für das Bedienpersonal dar, durch unvorsichtiges Hineingreifen in den Innenraum 20 sich zu verbrennen. Der Luftstrom 42 kann so eingestellt sein, dass einerseits die Temperatur im Innenraum 20 hoch genug ist, um die Speisen warm zu halten, andererseits kühl genug, damit das Bedienpersonal sich an den zu kühlenden Teilen 11 nicht verbrennt. Durch die Führung des Luftstroms 42 im Wesentlichen parallel zur Öffnung 14 kann gleichzeitig verhindert werden, dass durch Konvektion aus dem Innenraum 20 übermäßig Wärme in die Umgebung abgeführt würde.

An der oberen Innenwand 21 des Gehäuses 10 und /oder der Unterseite des Zwischenbodens 22 sind elektromagnetische Strahlungsquellen 30 montiert, die durch die perspektivische Ansicht hier verdeckt sind. Die Vorrichtung kann eine Vielzahl an weiteren Merkmalen zur Präsentation von Speisen aufweisen, die hier aus Gründen der Übersichtlichkeit nicht dargestellt sind. Diese umfassen insbesondere weitere Beleuchtungsmöglichkeiten sowie Beschilderung der Speisen für die Kundschaft oder das Bedienpersonal.

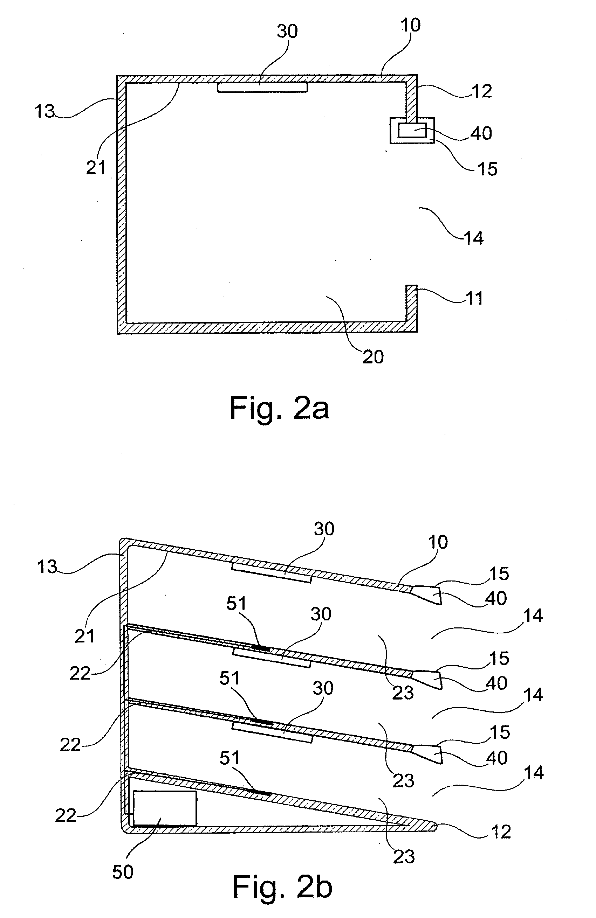

In Figur 2a ist ein seitlicher Schnitt einer einfachen Ausführungsform der erfindungsgemäßen Vorrichtung gezeigt. Das Gehäuse 10 umschließt einen Innenraum 20, der durch eine Öffnung 14 zugänglich ist, wobei die Öffnung 14 oben eine Querleiste 15 aufweist, in der eine Kühleinrichtung 40 montiert ist. Die Strahlungsquelle 30 ist an der oberen Innenwand 21 des Gehäuses 10 befestigt.

In Figur 2b ist ein seitlicher Schnitt einer weiteren Ausführungsform der erfindungsgemäßen Vorrichtung gezeigt. In diesem Beispiel ist der Innenraum 20 mittels Zwischenböden 22 in drei Fächer 23 unterteilt. Jedes der Fächer 23 hat eine Öffnung 14 mit integrierter Kühleinrichtung (40) zur Stirnseite 12 sowie je eine unter den Zwischenböden 22 oder der oberen Innenwand 21 befestigten eigenen Strahlungsquelle 30. In dem Gehäuse ist eine Temperatursteuerung 50 zur Steuerung der Strahlungsquelle 30 und/oder zur Steuerung der Kühleinrichtung 40 vorgesehen. Die Temperatursteuerung 50 umfasst im dargestellten Beispiel mehrere Temperatursensoren 51 zur Messung der Temperatur im Innenraum 20 des Gehäuses 10. Die Temperatursensoren 51 sind in die Oberseite der Zwischenböden 22 eingebaut, so dass jedes Fach 23 individuell angesteuert werden kann.

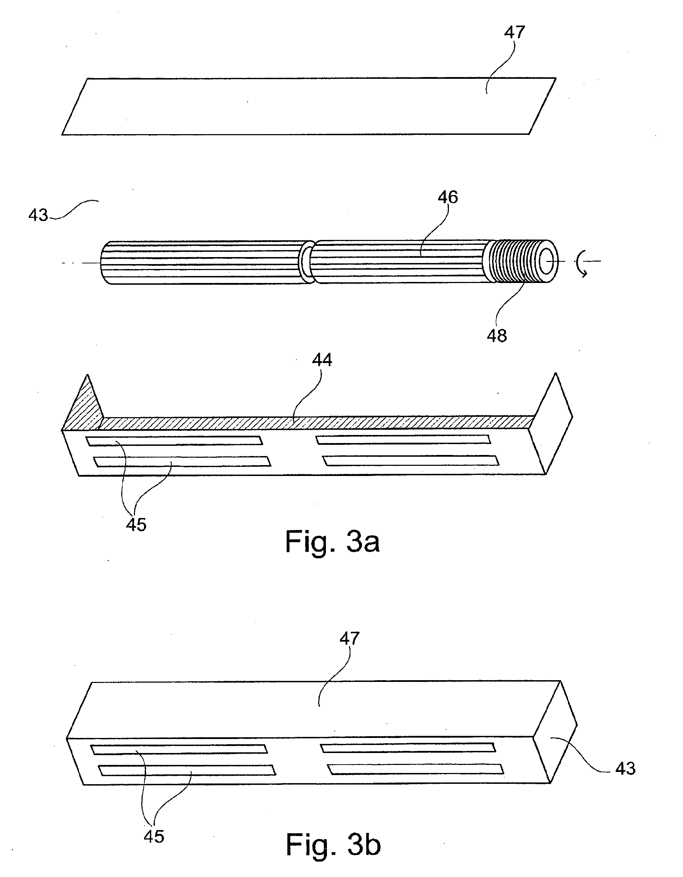

In Figur 3a ist ein Lüftungselement 43 gezeigt, wie es ein in eine Querleiste 14 integriertes Ventilationsmittel 41, wie in den Figuren 1, 2a und 2b gezeigt, umfassen kann. Im teilweise zerlegten Zustand in Figur 3a ist bei abmontierter Blende 47 der Blick in einen Hohlraum 44 frei, in dem ein Lüftungsgebläse 46 gelagert ist. Das Lüftungsgebläse 46 umfasst typischerweise einen Lüftungsmotor 48 und ist im gezeigten Beispiel als Tangentialventilator ausgebildet. Die an der Unterseite des Lüftungselements 43 vorgesehenen Lüftungsschlitze 45 ermöglichen bei Rotation des Lüftungsgebläses 46 einen ebenen Luftstrom 42 weg vom Lüftungselement 43. In Figur 3b ist das Lüftungselement 43 in zusammengebautem Zustand dargestellt.

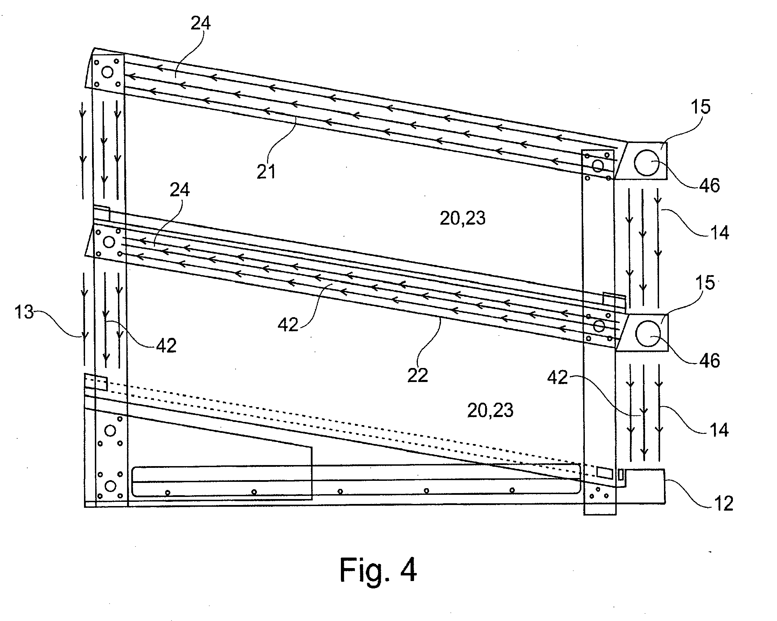

Die in Figur 4 dargestellte vorteilhafte Ausführungsform der erfindungsgemäßen Vorrichtung veranschaulicht in einem seitlichen Schnitt den durch die Ventilationsmittel 41 bewirkten Luftstrom 42. Die in die Querleisten 15 integrierten Lüftungsgebläse 46 bewirken einerseits einen nach unten gerichteten Luftstrom 42, der die Öffnungen 15 an der Stirnseite 12 überdeckt, andererseits wird ein weiterer Luftstrom 42 in den Innenraum 20 des Gehäuses 10 parallel zum Zwischenboden 22 und zur oberen Innenwand 21 erzeugt. Der im Innenraum 21 an die Rückseite 13 des Gehäuses 10 treffende Luftstrom 42 wird weiter nach unten abgelenkt.

Der nach unten gerichtete Luftstrom 42 auf sowohl der Stirnseite 12 als auch der Rückseite 13 des Gehäuses 10 bewirkt, dass der Innenraum 20 und damit die in den Fächern 23 liegenden Aufbewahrungszonen von einem Warmluftvorhang umgeben sind. Dieser Warmluftvorhang erschwert einerseits das Eindringen von Partikeln und Mikroorganismen in die Aufbewahrungszone und verhindert andererseits eine übermäßige Erwärmung des Bereichs der Öffnungen 14 des Gehäuses 10, wodurch die Gefahr, dass sich das Bedienpersonal am Gehäuse 10 verbrennt, reduziert wird.

Wie leicht einzusehen ist, können durch geeignete Gestaltung der oberen Innenwand 21 und der Zwischenböden 22 Kanäle 24 gebildet werden, beispielsweise durch doppelte Böden oder Strömungsrillen in den jeweiligen Bauteilen. Die Kanäle können so einer Divergenz des Luftstroms 42 entgegenwirken und zu einem effektiven Warmluftvorhang auch an der Rückseite 13 des Gehäuses 10 beitragen.

### Bezugszeichenliste

- 10: Gehäuse
- 11: zu kühlender Teil des Gehäuses
- 12: Stirnseite
- 13: Rückseite
- 14: Öffnung
- 15: Querleiste
- 20: Innenraum
- 21: Innenwand
- 22: Zwischenboden
- 23: Fach
- 24: Kanal
- 30: Strahlungsquelle
- 40: Kühleinrichtung
- 41: Ventilationsmittel
- 42: Luftstrom
- 43: Lüftungselement
- 44: Hohlraum
- 45: Lüftungsschlitze
- 46: Lüftungsgebläse
- 47: Blende
- 48: Lüftungsmotor
- 50: Temperatursteuerung
- 51: Temperatursensor

## Patentansprüche

1. Vorrichtung zum Erwärmen oder Warmhalten von Speisen, umfassend ein Gehäuse (10) mit mindestens einer Öffnung (14) zum Auffüllen oder zur Entnahme der Speisen,
einen Innenraum (20) der durch das Gehäuse (10) gebildet wird und
wenigstens eine, im Innenraum (20) des Gehäuses (10) angeordnete elektromagnetische Strahlungsquelle (30) zum Abstrahlen von Wärmestrahlung,
wobei das Gehäuse (10) eine Kühleinrichtung (40) zum Kühlen wenigstens eines Teils (11) des Gehäuses (10) aufweist, wobei die Kühleinrichtung (40) Ventilationsmittel (41) umfasst, die einen Luftstrom (42) aus der Umgebung entlang der zu kühlenden Teile (11) des Gehäuses (10) transportieren,
**dadurch gekennzeichnet, dass**
die Ventilationsmittel (41) außerdem einen im Wesentlichen parallel zur Öffnungsebene verlaufenden Luftstrom (42) erzeugen.

2. Vorrichtung gemäß Anspruch 1, **dadurch gekennzeichnet, dass** die zu kühlenden Teile (11) des Gehäuses (10) zumindest einen Teil der die mindestens eine Öffnung (14) umgebenden Gehäuseteile umfassen.

3. Vorrichtung gemäß einem der Ansprüche 1 oder 2, **dadurch gekennzeichnet, dass** die wenigstens eine Öffnung (14) an der Stirnseite (12) des Gehäuses (10) angeordnet ist und die Ventilationsmittel (41) in einer die Oberseite der wenigstens einen Öffnung (14) bildenden Querleiste (15) angeordnet ist.

4. Vorrichtung gemäß einem der Ansprüche 1 bis 3, **dadurch gekennzeichnet, dass** der Luftstrom (42) vertikal nach unten auf die untere Begrenzung der Öffnung (14) gerichtet ist.

5. Vorrichtung gemäß einem der Ansprüche 1 bis 4, **dadurch gekennzeichnet, dass** der Innenraum (20) mittels Zwischenböden (22) in im Wesentlichen vertikal von einander beabstandete Fächer (23) mit den jeweiligen Fächern zugeordneten Öffnungen (14) unterteilt ist.

6. Vorrichtung gemäß einem der Ansprüche 1 bis 5, **dadurch gekennzeichnet, dass** der Luftstrom (42) zusätzlich im Wesentlichen horizontal in den Innenraum (20) gerichtet ist, wobei die Luft entweder
- entlang der oberen Innenwand (21) des Gehäuses (10) und/oder den Unterseiten der Zwischenböden (22) oder
- durch in der oberen Innenwand (21) des Gehäuses (10) und/oder in den Zwischenböden (22) gebildete Kanäle (24)
strömt und dabei an der Rückseite (13) des Gehäuses (10) nach unten abgelenkt wird.

7. Vorrichtung nach einem der vorangegangenen Ansprüche, **dadurch gekennzeichnet, dass** das Ventilationsmittel (41) ein Lüftungselement (43) umfasst, das ein in einem mit Lüftungsschlitzen (45) versehenen Hohlraum (44) montiertes Lüftungsgebläse (46) aufweist.

8. Vorrichtung nach einem der vorangegangenen Ansprüche, **dadurch gekennzeichnet, dass** die elektromagnetische Strahlungsquelle (30)
- an der oberen Innenwand (21) des Gehäuses (10) und/oder den Unterseiten der Zwischenböden (22) befestigt oder
- in diese integriert sind.

9. Vorrichtung nach einem der vorangegangenen Ansprüche, **dadurch gekennzeichnet, dass** die elektromagnetische Strahlungsquelle (30) ein Halogenstrahler ist.

10. Vorrichtung nach einem der vorangegangenen Ansprüche, **dadurch gekennzeichnet, dass** eine Temperatursteuerung (50) zur Steuerung der Strahlungsquelle (30) zum Abstrahlen von Wärmestrahlung und/oder zur Steuerung der Kühleinrichtung (40) vorgesehen ist.

11. Vorrichtung nach Anspruch 10, **dadurch gekennzeichnet, dass** die Temperatursteuerung (50) wenigstens einen Temperatursensor (51) zur Messung der Temperatur im Innenraum (20) des Gehäuses (10) umfasst.

## Claims

1. Device for heating or keeping food warm, comprising
a housing (10) with at least one opening (14) for loading or removing the food, an interior space (20) formed by the housing (10), and
at least one electromagnetic radiation source (30) for emitting heat radiation, said at least one electromagnetic radiation source (30) disposed in the interior space (20) of the housing (10),
wherein the housing (10) comprises a cooling device (40) for cooling one or more parts (11) of the housing (10), said cooling device (40) including ventilation means (41) to transport an air current (42) from a surrounding area along the parts (11) of the housing (10) to be cooled,
**characterized in that**
the ventilation means (41) furthermore generate an air current (42) that runs substantially parallel to a plane that extends across the at least one opening of the housing (10).

2. Device according to claim 1,
**characterized in that**
the parts (11) of the housing (10) to be cooled comprise at least a part of the housing (10) that surrounds the at least one opening (14).

3. Device according to one of the claims 1 or 2,
**characterized in that**
the at least one opening (14) is located at a front side (12) of the housing (10), and the ventilation means (41) are arranged in a crossbar (15) that defines the upper boundary of the at least one opening (14).

4. Device according to one of the claims 1 to 3,
**characterized in that**
the air current (42) is directed vertically downward toward a lower boundary of the opening (14).

5. Device according to one of the claims 1 to 4,
**characterized in that**
the interior space (20) is divided by intermediate shelves (22) into compartments (23) that are spaced in a substantially vertical orientation, wherein an opening (14) is associated with each compartment (23).

6. Device according to one of the claims 1 to 5,
**characterized in that**
furthermore the air current (42) runs in a substantially horizontal direction into the interior space (20), wherein the air flows either:
- along an upper inner wall (21) of the housing (10) and/or lower sides of the intermediate shelves (22), or
- through channels (24) formed in the upper inner wall (21) of the housing (10) and/or in the intermediate shelves (22);
and is deflected downward at a back side (13) of the housing (10).

7. Device according to one of the preceding claims,
**characterized in that**
the ventilation means (41) include a ventilation element (43) having a blower (46) disposed in a hollow chamber (44) and ventilation vents (45) formed in said ventilation element.

8. Device according to one of the preceding claims ,
**characterized in that**
the at least one electromagnetic radiation source (30) is
- attached at an upper inner wall (21) of the housing (10) and/or at lower sides of the intermediate shelves (22), or
- integrated into said upper inner wall and said intermediate shelves.

9. Device according to one of the preceding claims ,
**characterized in that**
the electromagnetic radiation source (30) is a halogen lamp.

10. Device according to one of the preceding claims ,
**characterized in that**
said device further comprises a temperature control system (50) for controlling the electromagnetic radiation source (30) for emitting heat radiation and/or controlling the cooling device (40).

11. Device according to one claim 10,
**characterized in that**
the temperature control system (50) comprises at least one temperature sensor (51) for measuring the temperature in the interior space (20) of the housing (10).

## Revendications

1. Dispositif de chauffage ou de maintien au chaud de mets, comprenant un boîtier (10) avec au moins une ouverture (14) pour l'introduction ou le retrait des mets,
un espace interne (20) constitué par le boîtier (10) et au moins une source de rayonnement électromagnétique (30) disposée dans l'espace interne (20) du boîtier (10) pour l'émission d'un rayonnement thermique,
le boîtier (10) comprenant un dispositif de refroidissement (40) pour le refroidissement d'au moins une partie (11) du boîtier (10), le dispositif de refroidissement (40) comprenant des moyens de ventilation (41) qui transportent un flux d'air (42) provenant de l'environnement le long de la partie à refroidir (11) du boîtier (10),
**caractérisé en ce que**
les moyens de ventilation (41) produisent en outre un flux d'air (42) globalement parallèle au plan de l'ouverture.

2. Dispositif selon la revendication 1, **caractérisé en ce que** les parties à refroidir (11) du boîtier (10) comprennent au moins une partie des parties du boîtier entourant l'au moins une ouverture (14).

3. Dispositif selon l'une des revendications 1 ou 2, **caractérisé en ce que** l'au moins une ouverture (14) se trouve au niveau du côté frontal (12) du boîtier (10) et les moyens de ventilation (41) se trouvent dans une barre transversale (15) formant le côté supérieur de l'au moins une ouverture (14).

4. Dispositif selon l'une des revendications 1 à 3, **caractérisé en ce que** le flux d'air (42) est orienté verticalement vers le bas vers la limite inférieure de l'ouverture (14).

5. Dispositif selon l'une des revendications 1 à 4, **caractérisé en ce que** l'espace interne (20) est divisé, à l'aide de fonds intermédiaires (22), en compartiments (23) distants entre eux de manière globalement verticale, les ouvertures (14) correspondant aux compartiments.

6. Dispositif selon l'une des revendications 1 à 5, **caractérisé en ce que** le flux d'air (42) est orienté en outre de manière globalement horizontale dans l'espace interne (20), l'air s'écoulant soit
- le long de la paroi interne supérieure (21) du boîtier (10) et/ou des côtés inférieurs des fonds intermédiaires (22) ou
- à travers des canaux (24) prévus dans la paroi interne supérieure (21) du boîtier (10) et/ou dans les fonds intermédiaires (22)
et étant alors dévié vers le bas au niveau du côté arrière (13) du boîtier (10).

7. Dispositif selon l'une des revendications précédentes, **caractérisé en ce que** le moyen de ventilation (41) comprend un élément de ventilation (43), qui comprend une soufflante de ventilation (46) montée dans un espace creux (44) muni de fentes de ventilation (45).

8. Dispositif selon l'une des revendications précédentes, **caractérisé en ce que** la source de rayonnement électromagnétique (30)
- est fixée à la paroi interne supérieure (21) du boîtier (10) et/ou aux côtés inférieures des fonds intermédiaires (22) ou
- est intégrée dans ceux-ci.

9. Dispositif selon l'une des revendications précédentes, **caractérisé en ce que** la source de rayonnement électromagnétique (30) est un projecteur halogène.

10. Dispositif selon l'une des revendications précédentes, **caractérisé en ce qu'**un dispositif de contrôle de la température (50) est prévu pour le contrôle de la source de rayonnement (30) qui émet un rayonnement thermique et/ou le contrôle du dispositif de refroidissement (40).

11. Dispositif selon la revendication 10, **caractérisé en ce que** le dispositif de contrôle de la température (50) comprend au moins un capteur de température (51) permettant de mesurer la température dans l'espace interne (20) du boîtier (10).
